# EUROPEAN PATENT APPLICATION

(11) **EP 4 243 155 A1**
(43) Date of publication of application: **13.09.2023**
(21) Application number: 23153418.1
(22) Date of filing: 26.01.2023
(51) Int. Cl.: H01M 10/42, G06T 7/00, H01M 50/249, G01B 11/02, G01B 11/22, G01B 11/30, B60L 53/80, B60L 58/10, B60L 3/00, B60S 5/06, G01N 21/88, B60K 1/04

(54) **BATTERY SWAP ABNORMALITY DETECTION METHOD, SYSTEM, COMPUTER-READABLE STORAGE MEDIUM, AND BATTERY SWAP STATION**

(30) Priority: 08.03.2022 CN 202210216184
(71) Applicant: Nio Technology (Anhui) Co., Ltd, Hefei City, Anhui 230611 (CN)
(72) Inventor: DING, Shenyi, Hefei, Anhui, 230601 (CN); WANG, Yifei, Heifei, Anhui, 230601 (CN); LI, Binglei, Hefei, Anhui, 230601 (CN); ZOU, Jiyong, Hefei, Anhui, 230601 (CN)
(74) Representative: Vossius & Partner Patentanwälte Rechtsanwälte mbB

(57) **Abstract**

The disclosure relates to a battery swap abnormality detection method, a system, a computer-readable storage medium, and a battery swap station. The battery swap abnormality detection method includes the following steps: S 100: obtaining battery swap process information of a vehicle with a battery to be swapped, and obtaining an image of a traction battery based on the battery swap process information; S200: detecting whether there is an abnormality in the traction battery based on the image and the battery swap process information by using an edge computing method, the edge computing method being implemented by an edge computing device arranged in a battery swap station; and S300: controlling a battery swap process in response to a detection result from the edge computing device. In the battery swap abnormality detection method, the system, the computer-readable storage medium, and the battery swap station according to the disclosure, a battery swap abnormality, particularly a traction battery abnormality, of a vehicle is detected near a data source by means of an edge computing device, such that the real-time performance and stability of detection can be ensured.

## Description

### Technical Field

The disclosure relates to a battery swap abnormality detection method, a system, a computer-readable storage medium, and a battery swap station.

### Background Art

At present, there are two main modes of energy supply for an electric vehicle: vehicle charging and battery swap (i.e., battery replacement). The vehicle charging mode can be divided into alternating current slow charging and direct current fast charging, where time required for the alternating current slow charging is long and is limited by a parking lot. In addition, although the direct current fast charging has high power and short charging time, it has a large impact on a grid and also reduces service life of the battery. On the contrary, the battery swap mode can reduce damage to battery life while providing rapid energy supply for the electric vehicle. In addition, the battery swap mode can implement "peak shaving and energy storage" of the power load of the grid, and therefore improve the comprehensive utilization efficiency of power devices. During battery swapping, a battery swap execution mechanism, such as a robotic arm or a battery swap robot, is usually required to dismount a used battery (an old battery) from a vehicle chassis and then mount another service battery (a new battery or a fresh battery).

While ensuring a normal battery swap process, a battery swap station should not only prevent a damaged battery from entering a circulation chain as much as possible, but should also maximally prevent a corresponding device of the battery swap station from being damaged. For example, a connection between a head (which can also be referred to as a gun tip) of a locking/unlocking mechanism in the battery swap station and a servo motor becomes loose after long-term use, resulting in the mounting of the head onto a vehicle along with bolts. This may bring about a potential safety hazard during the traveling of the vehicle, and accordingly, the battery swap station cannot continue to perform battery swapping due to the missing of the gun tip.

### Summary of the Disclosure

According to different aspects, an objective of the disclosure is to provide a battery swap abnormality detection method for use in a battery swap station, and a system, a computer-readable storage medium and a battery swap station.

In addition, the disclosure also aims to solve or alleviate other technical problems existing in the prior art.

To solve the foregoing problems, the disclosure provides a battery swap abnormality detection method, which specifically includes the following steps:
S 100: obtaining battery swap process information of a vehicle with a battery to be swapped, and obtaining an image of a traction battery based on the battery swap process information;
S200: detecting whether there is an abnormality in the traction battery based on the image and the battery swap process information by using an edge computing method, the edge computing method being implemented by an edge computing device arranged in a battery swap station; and
S300: controlling a battery swap process in response to a detection result from the edge computing device.

In the battery swap abnormality detection method according to an aspect of the disclosure, step S100 includes a sub-step S110: obtaining a first image of a used battery in response to the battery swap process information indicating that a deviation between an actual pose and a theoretical pose of the vehicle with the battery to be swapped on a parking platform is within a preset range.

In the battery swap abnormality detection method according to an aspect of the disclosure, step S200 includes the following sub-steps:
S210: detecting whether there is a housing abnormality and/or a fastening position abnormality in the used battery based on the first image by using the edge computing method; and
S220: performing risk assessment on the used battery upon detecting that there is a housing abnormality and/or a fastening position abnormality in the used battery.

In the battery swap abnormality detection method according to an aspect of the disclosure, it is detected, in the sub-step S210, whether there is a housing abnormality and/or a fastening position abnormality in the used battery according to a deep learning model constructed based on a plurality of first sample images or according to a result of comparison between the first image and a standard first image.

In the battery swap abnormality detection method according to an aspect of the disclosure, the housing abnormality includes one or more of a bulge, a pit, a scratch, and a leaked liquid; and in the sub-step S220, in response to detecting that there is a bulge, a pit, or a scratch on a housing of the used battery, a size of the bulge, the pit, or the scratch is obtained and compared with a threshold, and/or in response to detecting that there is a leaked liquid from the housing of the used battery, position information of the leaked liquid is obtained and compared with preset position information.

In the battery swap abnormality detection method according to an aspect of the disclosure, step S 100 further includes a sub-step S 120: obtaining a second image of a service battery in response to the battery swap process information indicating that the service battery has been assembled at a vehicle chassis.

In the battery swap abnormality detection method according to an aspect of the disclosure, step S200 further includes a sub-step S230: detecting whether there is a fastening position abnormality in the service battery based on the second image by using the edge computing method, the fastening position abnormality including a case where a head of a locking/unlocking mechanism is left at a fastener.

In the battery swap abnormality detection method according to an aspect of the disclosure, in the sub-step S230, a sub-image of the second image that includes the fastener is obtained, and it is detected whether the head of the locking/unlocking mechanism is left at the fastener according to a deep learning model constructed based on a plurality of second sample images or according to a result of comparison between the sub-image and a standard sub-image.

According to another aspect of the disclosure, the disclosure provides a system for performing the battery swap abnormality detection method, the system specifically including:
an image acquisition module configured to obtain an image of a traction battery;
a control module configured to obtain battery swap process information of a vehicle with a battery to be swapped, and to stop or start a battery swap process; and
an edge computing device arranged in a battery swap station and communicating with a cloud platform, the edge computing device being configured to detect whether there is an abnormality in the traction battery based on the image of the traction battery and the battery swap process information.

In the system according to another aspect of the disclosure, the system further includes a parking detection module configured to determine whether the vehicle with the battery to be swapped is parked in place by comparing an actual pose and a theoretical pose of the vehicle with the battery to be swapped on a parking platform, and output a determination result to the control module.

In the system according to another aspect of the disclosure, the edge computing device includes a first module, and the first module is configured to detect whether there is a housing abnormality and/or a fastening position abnormality in a used battery, and to assess an impact of the housing abnormality and/or a fastener on the used battery.

In the system according to another aspect of the disclosure, a deep learning model constructed based on a plurality of first sample images is stored, in a memory of the first module, to detect whether there is a housing abnormality and/or a fastening position abnormality in the used battery.

In the system according to another aspect of the disclosure, the edge computing device further includes a second module, and the second module is configured to detect whether a head of a locking/unlocking mechanism configured to screw or unscrew a service battery fastener is left at the fastener.

In the system according to another aspect of the disclosure, a deep learning model constructed based on a plurality of second sample images is stored, in a memory of the second module, to detect whether the head of the locking/unlocking mechanism is left at the fastener, the second sample image being an image of the service battery that is obtained by the image acquisition module or a sub-image of the image that includes the fastener.

In the system according to another aspect of the disclosure, the first module and the second module are constructed separately.

In the system according to another aspect of the disclosure, the image acquisition module is provided with a two-dimensional image acquisition apparatus.

According to still another aspect of the disclosure, the disclosure provides a computer-readable storage medium having a computer program stored thereon, where the computer program, when executed by a processor, implements the above-described battery swap abnormality detection method.

According to yet still another aspect of the disclosure, the disclosure provides a battery swap station, which includes the above-described system for performing the battery swap abnormality detection method.

The battery swap abnormality detection method, the system, the computer-readable storage medium, and the battery swap station according to the disclosure have the beneficial effect of: a battery swap abnormality, particularly a traction battery abnormality, of a vehicle is detected near a data source by means of an edge computing device, such that the real-time performance and stability of detection can be ensured.

### Brief Description of the Drawings

The foregoing and other features of the disclosure will be apparent with reference to the accompany drawings, in which
FIG. 1 is a sub-flowchart of a battery swap abnormality detection method according to the disclosure;
FIG. 2 shows sub-steps of the sub-flowchart in FIG. 1;
FIG. 3 shows sub-steps of the sub-flowchart in FIG. 1;
FIG. 4 is a schematic diagram showing, in a block diagram, a system for performing a battery swap abnormality detection method according to the disclosure; and
FIG. 5 schematically shows an embodiment of the system according to FIG. 4.

### Detailed Description of Embodiments

It can be readily understood that according to the technical solution of the disclosure, a person of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Directional terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding components.

It is first to be noted that a battery swap station mentioned herein can be understood as a building-type battery swap station separated from the outside world. In addition, the battery swap station can also be understood as a battery swap platform or a battery swap apparatus for operations of replacement of a traction battery of a vehicle, such as a stationary, movable or foldable battery swap platform or battery swap apparatus. In addition, the battery swap station can further involve a so-called battery charging and swap station or a battery charging and swap platform.

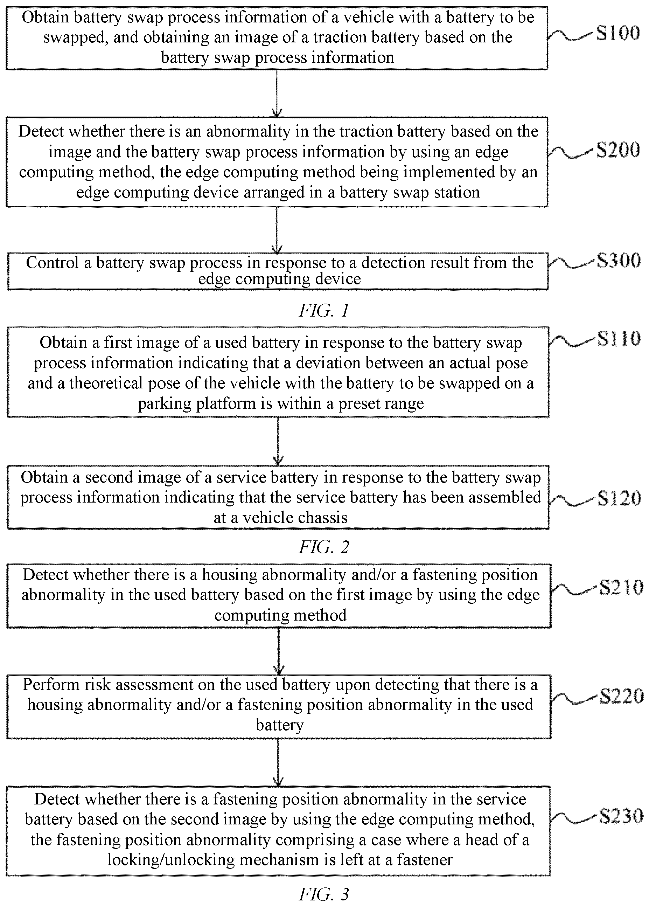

Referring to FIGS. 1 to 3, a sub-flowchart of a battery swap abnormality detection method according to the disclosure is shown. The method includes the following steps:
S 100: obtaining battery swap process information of a vehicle with a battery to be swapped, and obtaining an image of a traction battery based on the battery swap process information;
S200: detecting whether there is an abnormality in the traction battery based on the image and the battery swap process information by using an edge computing method, the edge computing method being implemented by an edge computing device arranged in a battery swap station; and
S300: controlling a battery swap process in response to a detection result from the edge computing device.

It should be noted that the step names mentioned above (and further be mentioned below) are merely used to distinguish between the steps and facilitate reference of the steps, and do not represent a sequence relationship between the steps, and the flowcharts including the drawings are merely examples of performing the method. Without significant conflict, the steps may be performed in various orders or simultaneously.

In general, a battery swap abnormality, particularly a traction battery abnormality, of a vehicle is detected near a data source (namely in a local edge computing layer) by means of an edge computing device, such that the real-time performance and stability of detection can be ensured. Additionally, the use of one or more edge computing devices to perform image processing, which requires a relatively high processing capability, can lower a computational load of a cloud to some extent, and facilitate the implementation of the Internet of things.

Here, the "battery swap process information" can be used to indicate a time node or time period in which a battery swap process stays. Specifically, it indicates a state of the traction battery (the used battery or the service battery) on a vehicle chassis. Specifically, the whole battery swap process can be divided into, for example, a parking phase (namely the vehicle is parked at a preset position on a parking platform), a used battery dismounting phase, a service battery mounting phase, and a leaving phase (that is, the battery swap process ends and the vehicle leaves the battery swap station).

In addition, considering different requirements for the used battery and the service battery, the invoking of corresponding steps stored in the edge computing device based on the battery swap process information can further speed up battery swap abnormality detection.

In order to prevent further circulation of a traction battery with a quality problem (for example, the damage of a housing or a battery module or the damage of a cooling apparatus), an abnormality of the used battery is detected and assessed at the start of the battery swap process, particularly before the used battery dismounting phase. According to the disclosure, the abnormality, particularly a surface abnormality, of the used battery is detected by means of image processing performed in the edge computing device. In step S 100, a corresponding image acquisition apparatus can be activated based on the battery swap process information, to obtain the image of the traction battery, particularly an image of a lower surface of the traction battery.

Specifically, the image acquisition apparatus is turned on to obtain a first image of a lower surface of the used battery when the vehicle with the battery to be swapped is parked in place or the vehicle with the battery to be swapped is hoisted to a preset height by means of a hoisting mechanism of the battery swap station. For example, step S100 may include a sub-step S110: obtaining a first image of a used battery in response to the battery swap process information indicating that a deviation between an actual pose and a theoretical pose of the vehicle with the battery to be swapped on a parking platform is within a preset range. Specifically, an image depicting the actual pose of the vehicle on the parking platform is compared with a preset standard image depicting the theoretical parking pose of the vehicle. If a deviation between the two is within the preset range, it is determined that the vehicle is parked in place, and the first image is obtained. Certainly, it can also be detected whether the vehicle is parked in place by detecting a position of a wheel on the parking platform based on a sensor arranged on the parking platform, particularly at a V-shaped groove of the parking platform.

It is to be noted here that the concept of "pose" refers to a position of the vehicle relative to the parking platform, or a pose of parking (including angled parking and standard parking) of the vehicle, or a combination thereof.

In order to ensure correct assembling of the service battery, the fixed service battery should also be detected during the battery swap process, for example, detecting whether there is a foreign matter at a fastening position (i.e., a position of a traction battery fastener). Similarly, this can also be implemented by recognizing an image of the service battery. Specifically, a second image of the service battery is obtained when the service battery has been mounted and before the vehicle leaves. In other words, step S 100 further includes a sub-step S 120: obtaining a second image of a service battery in response to the battery swap process information indicating that the service battery has been assembled at a vehicle chassis.

Optionally, the image acquisition apparatus is calibrated before the first image of the used battery and the second image of the service battery are obtained, so as to detect whether there is an imaging quality problem, such as an incomplete image (caused by, for example, network, software, and hardware errors), an image parameter error (caused by, for example, a resolution error, and a focal length error of a camera), a poor image quality (caused by, for example, a dirty surface of the camera, poor light, and occlusion by a foreign matter), or image scene position offset (caused by, for example, a change in a mounting position). The image acquisition apparatus can be calibrated automatically by means of comparison with a standard image or based on a deep learning model. Here, if an imaging quality problem occurs in the image acquisition apparatus has, an alarm system in the battery swap station is manipulated to give an alarm or prompt a corresponding maintenance technician through a cloud platform.

It is to be noted here that the first image and the second image may be two-dimensional (2D) images or three-dimensional (3D) images. Accordingly, the image acquisition apparatus can be constructed as a 2D or 3D image acquisition apparatus.

With respect to battery swap abnormality detection of the used battery, step S200 includes the following sub-steps:
S210: detecting whether there is a housing abnormality and/or a fastening position abnormality in the used battery based on the first image by using the edge computing method; and
S220: performing risk assessment on the used battery upon detecting that there is a housing abnormality and/or a fastening position abnormality in the used battery.

Here, the housing abnormality (which can also be referred to as a surface abnormality) of the used battery includes, for example, an undercarriage collision, a bulge, a pit, a scratch, a leaked liquid, etc. The fastening position abnormality includes the presence of a covering or an obstruction at the traction battery fastener, such as the presence of ice and snow, sludge, a stone, or other foreign matters in a lock hole of the fastener. It is to be noted here that when the housing abnormality or the fastening position abnormality is detected, an impact thereof on the performance of the traction battery should be assessed to ensure that the traction battery even with a damaged housing but a satisfactory performance can continue to be circulated.

Optionally, the obtained first image is compared, based on edge computing, with a standard image stored in the edge computing device or the cloud platform, so as to determine whether the housing abnormality exists in the traction battery. In this process, the first image can be first divided into a plurality of first sub-images for respective comparison with the standard image.

Certainly, it can also be detected whether there is a surface abnormality in the lower surface of the used battery based on a deep learning model by means of the edge computing device. The deep learning model is, for example, constructed as a convolutional neural network model, and is trained in advance with a plurality of sets of training data containing first sample images and corresponding labeling information, where the labeling information represents whether there is a housing abnormality in the first sample image, and can be matched with the first sample image for storage as an independent file. Here, the training data can be extended by means of online data augmentation, such as translation, rotation, flipping, a contrast change, a luminance change, and enhanced Gaussian noise, so as to diversify the training data. The convolutional neural network model can include a convolutional layer, a normalization layer, an activation layer, a max-pooling layer, a fully connected layer, and an output layer. For example, in the output layer, a determination result is output as a probability value by using a Softmax function, and a Softmax cross entropy loss is used. In addition, the output layer can, for example, directly output "1" or "0" to represent the presence or absence of an undercarriage collision, a bulge, a pit, a scratch, and a leaked liquid in the used battery. Alternatively, other manners are also possible.

If it is detected, in step S210, that there is a bulge, a pit, an undercarriage collision, or a scratch on the lower surface of the used battery, a size parameter (such as a depth, a height, or a width) of the bulge, the pit, the undercarriage collision, or the scratch is measured and compared with a preset threshold. If a deviation between the two exceeds a preset range, it is determined that the housing abnormality exists in the used battery. Specifically, the size parameter of the bulge, the pit, the undercarriage collision, or the scratch can be measured by means of a depth sensor arranged under the parking platform. The depth sensor can be arranged as a laser radar sensor or a spacing sensor, and can particularly move relative to the vehicle chassis in order to cover the whole lower surface of the traction battery.

In addition, when the first image is a 3D image, a difference, with respect to the height or depth of the bulge, the dent, the undercarriage collision, or the scratch, of the first image in a direction perpendicular to a plane of the traction battery (such as a vertical direction) can be calculated by means of the edge computing device. If the difference is greater than a preset threshold, it is determined that there is an abnormality in the used battery and the used battery is not allowed to continue to be circulated.

If it is detected, in step S210, that there is a leaked liquid on the lower surface of the used battery, there is a need to further determine whether the leaked liquid is a coolant of the used battery. If the leaked liquid is the coolant, it is determined that there is an abnormality in the used battery and the used battery is not allowed to continue to be circulated. Considering that the coolant is in a specific color, a feature region of the first image that includes a leakage region is selected, and an RGB value of the feature region is obtained. If a deviation between the RGB value and a standard RGB value exceeds a preset range, it is determined that the leaked liquid is the coolant. Considering a position at which a cooling pipeline of the traction battery is arranged, the leaked liquid can also be detected by determining whether a position of the leaked liquid in the image is the position of the cooling pipeline.

In order to ensure that a battery swap execution mechanism, particularly a head (i.e., a gun tip) of a locking/unlocking mechanism configured to screw or unscrew the traction battery fastener will not be damaged, a fastening position of the used battery is also detected during the battery swap process. For example, a sub-image of the first image that includes the fastener is selected, and it is detected whether there is a stone, ice and snow, or sludge at the fastener by means of a deep learning model stored in the edge computing device. If a detection result is YES, the alarm system of the battery swap station is controlled to give an alarm or inform a corresponding technician through the cloud platform.

In addition, when the battery swap process information indicates that the service battery has been mounted, the edge computing device detects whether there is an abnormality in a service battery fastener based on the second image of the service battery. In other words, step S200 further includes the following sub-step S230: detecting whether there is a fastening position abnormality in the service battery based on the second image by using the edge computing method, the fastening position abnormality including a case where a head of a locking/unlocking mechanism is left at a fastener. Specifically, a sub-image of the second image that includes the fastener is obtained based on a selection of a region of interest in the image, and is compared with a standard sub-image, to detect whether the head of the locking/unlocking mechanism is left at the fastener. Optionally, this process can also be implemented based on a deep learning model. The deep learning model is trained in advance with a plurality of sets of training data containing second sample images (i.e., second images of the service battery or sub-images of the second images) and corresponding labeling information, where the labeling information indicates whether the head of the locking/unlocking mechanism is left at the fastener. Certainly, the detection of the fastening position of the service battery can also be implemented by a sensor such as a laser radar sensor and an ultrasonic sensor, which will not be repeated here.

A general process of the battery swap abnormality detection method according to the disclosure will be illustratively described below. First, a calibration image is obtained by the image acquisition apparatus. If the image is satisfactory, subsequent battery swap abnormality detection is performed. If there is an imaging quality problem, a maintenance person is prompted to adjust the image acquisition apparatus. Then, when the vehicle with the battery to be swapped is hoisted to a certain height, the edge computing device triggers the image acquisition apparatus to obtain a first image of the used battery, and determines whether there is a housing abnormality or a fastening position abnormality in the used battery. If the housing abnormality or the fastening position abnormality is detected in the used battery, the technician is informed for checking. When the service battery has been mounted, the edge computing device triggers the image acquisition apparatus to obtain a second image of the service battery, and determines whether the gun tip is left at the fastener. If a determination result is YES, the technician is informed for checking.

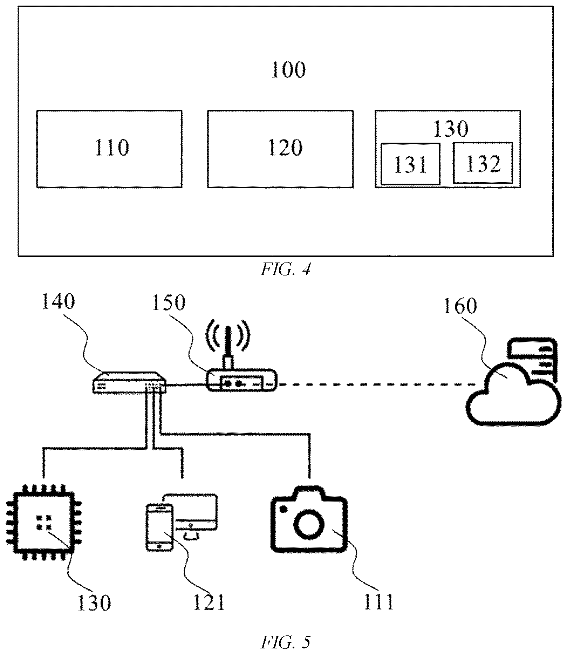

In addition, the disclosure further includes a system 100 for detecting a battery swap abnormality in a battery swap station, which is shown in a block diagram in FIG. 4. The system includes:
an image acquisition module 110 configured to obtain an image of a traction battery;
a control module 120 configured to obtain battery swap process information of a vehicle with a battery to be swapped, and to stop or start a battery swap process; and
an edge computing device 130 arranged in a battery swap station and communicating with a cloud platform, the edge computing device being configured to detect whether there is an abnormality in the traction battery based on the image of the traction battery and the battery swap process information.

The use of the edge computing device 130 arranged in the battery swap station can endure the real-time performance and stability of detection, and can thus lower a computational load of a cloud to some extent, and facilitate the implementation of the Internet of things.

Here, the image acquisition module 110 can include a 2D camera, a panorama camera (such as a fish-eye camera), a 3D camera, or an infrared camera. Particularly, in order for relatively fast recognition of an abnormality of the traction battery, the image acquisition module can preferably include a 2D camera, and the 2D camera can be equipped with a corresponding fill-in light apparatus to obtain a sharp image with an appropriate amount of exposure.

Additionally, the image acquisition module 110 can be arranged towards a vehicle chassis under a parking platform. Moreover, the image acquisition module 110 is movably arranged below the vehicle chassis by means of a guide rail or other moving mechanism, so as to obtain a panoramic image of the lower surface of the traction battery or an image of a specific region.

Optionally, the edge computing device 130 includes a first module 131, and the first module is configured to detect whether there is a housing abnormality and/or a fastening position abnormality in a used battery, and to assess an impact of the housing abnormality and/or a fastener on the used battery. Optionally, a deep learning model constructed based on a plurality of first sample images is stored, in a memory of the first module 131, to detect whether there is a housing abnormality and/or a fastening position abnormality in the used battery. For this, reference is made to the explanations for the method according to the disclosure.

Optionally, the edge computing device 130 further includes a second module 132, and the second module is configured to detect whether a head of a locking/unlocking mechanism configured to screw or unscrew a service battery fastener is left at the fastener.

For example, a deep learning model constructed based on a plurality of second sample images is stored, in a memory of the second module 132, to detect whether the head of the locking/unlocking mechanism is left at the fastener, the second sample image being an image of the service battery that is obtained by the image acquisition module 110 or a sub-image of the image that includes the fastener. For this, reference is made to the explanations for the method according to the disclosure.

Optionally, considering different requirements for the used battery and the service battery, the first module 131 and the second module 132 can be constructed separately, and the first module 131 or the second module 132 is invoked based on the battery swap process information provided by the control module 120. For this, reference is made to the explanations for the method according to the disclosure. Certainly, the following technical solution is not excluded. In other words, the first module 131 and the second module 132 can also be constructed integrally.

The system for performing battery swap abnormality detection according to the disclosure will be illustratively described below in conjunction with FIG. 5. The system includes a 2D camera 111 (of an image acquisition module), an edge computing device 130, a host computer 121 used as a control module, a switch 140, a router 150, and a cloud platform 160. The 2D camera 111, the edge computing device 130, and the host computer 121 are connected to the switch 140 and the router 150 through a network cable. Through a 4G or 5G network, the router 150 is connected to the cloud platform 160 deployed at a cloud and performs data exchange with the cloud platform. The 2D camera serves to obtain an image at a specified moment, while the edge computing device 130 serves to calibrate the 2D camera, detect an abnormality (including a housing abnormality and a fastening position abnormality of a used battery and a fastening position abnormality of a service battery) of a traction battery, and then output a detection result to the host computer 121 that controls a battery swap process, and to the cloud platform 160. In addition, upon detection of an abnormality, the cloud platform 160 can inform a related technician for checking and processing according to specified logic.

Additionally, to obtain the battery swap process information, the system further includes a parking detection module (not shown) configured to determine a time point at which the acquisition of the first image of the used battery begins. The parking detection module can be integrated into the control module, or arranged in the system as a component separated from the control module. Optionally, the parking detection module may include a sensor, such as a laser sensor, arranged on the parking platform, particularly at a V-shaped groove of the parking platform, so as to determine whether the vehicle is at a specified position based on a signal of the sensor. In this case, the parking detection module can also directly interact with a control system of the battery swap station. In another implementation, the parking detection module can also be configured to determine, by means of image processing such as neural network model-based image processing, whether the vehicle is parked in place. For example, the parking detection module can compare an image indicating an actual pose of the vehicle with the battery to be swapped on the parking platform with an image indicating a theoretical pose of the vehicle with the battery to be swapped, so as to determine whether the vehicle with the battery to be swapped is parked in place.

In addition, the disclosure further relates to a battery swap station including such a system for performing battery swap abnormality detection. The system can be connected to or integrated into a main control system of the battery swap station.

Finally, the disclosure further relates to a computer-readable storage medium having a computer program stored thereon, where the computer program, when executed by a processor, implements such a battery swap abnormality detection method.

In general, the disclosure has the following advantages over the previous/prior art.
1. The use of a locally deployed control mechanism and the edge computing device for battery swap abnormality detection can allow a field technician to be informed, in a timely manner, for overhauling, thereby maximally reducing the risk.
2. The detection process is automated, which simplifies the whole battery swap process.
3. The image of the feature region in which the fastener is located is captured, which allows the position information of the head of the locking/unlocking gun to be measured accurately.
4. Performing double detection on the used battery and the service battery can prevent a traction battery with a quality problem from entering a circulation chain, and can prevent a battery swap execution apparatus from being damaged.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A battery swap abnormality detection method, comprising the following steps:
S 100: obtaining battery swap process information of a vehicle with a battery to be swapped, and obtaining an image of a traction battery based on the battery swap process information;
S200: detecting whether there is an abnormality in the traction battery based on the image and the battery swap process information by using an edge computing method, the edge computing method being implemented by an edge computing device arranged in a battery swap station; and
S300: controlling a battery swap process in response to a detection result from the edge computing device.

2. The battery swap abnormality detection method according to claim 1, wherein step S100 comprises a sub-step S 110: obtaining a first image of a used battery in response to the battery swap process information indicating that a deviation between an actual pose and a theoretical pose of the vehicle with the battery to be swapped on a parking platform is within a preset range.

3. The battery swap abnormality detection method according to claim 1 or 2, wherein step S200 comprises the following sub-steps:
S210: detecting whether there is a housing abnormality and/or a fastening position abnormality in the used battery based on the first image by using the edge computing method; and
S220: performing risk assessment on the used battery upon detecting that there is a housing abnormality and/or a fastening position abnormality in the used battery.

4. The battery swap abnormality detection method according to claim 3, wherein it is detected, in the sub-step S210, whether there is a housing abnormality and/or a fastening position abnormality in the used battery according to a deep learning model constructed based on a plurality of first sample images or according to a result of comparison between the first image and a standard first image.

5. The battery swap abnormality detection method according to claim 3 or 4, wherein the housing abnormality comprises one or more of a bulge, a pit, a scratch, and a leaked liquid; and in the sub-step S220, in response to detecting that there is a bulge, a pit, or a scratch on a housing of the used battery, a size of the bulge, the pit, or the scratch is obtained and compared with a threshold, and/or in response to detecting that there is a leaked liquid on the housing of the used battery, position information of the leaked liquid is obtained and compared with preset position information.

6. The battery swap abnormality detection method according to any one of claims 2 to 6, wherein step S 100 further comprises a sub-step S 120: obtaining a second image of a service battery in response to the battery swap process information indicating that the service battery has been assembled at a vehicle chassis.

7. The battery swap abnormality detection method according to claim 6, wherein step S200 further comprises a sub-step S230: detecting whether there is a fastening position abnormality in the service battery based on the second image by using the edge computing method, the fastening position abnormality comprising a case where a head of a locking/unlocking mechanism is left at a fastener.

8. The battery swap abnormality detection method according to claim 7, wherein in the sub-step S230, a sub-image of the second image that comprises the fastener is obtained, and it is detected whether the head of the locking/unlocking mechanism is left at the fastener according to a deep learning model constructed based on a plurality of second sample images or according to a result of comparison between the sub-image and a standard sub-image.

9. A system for performing the battery swap abnormality detection method according to any one of claims 1 to 8, the system comprising:
an image acquisition module configured to obtain an image of a traction battery;
a control module configured to obtain battery swap process information of a vehicle with a battery to be swapped, and to stop or start a battery swap process; and
an edge computing device arranged in a battery swap station and communicating with a cloud platform, the edge computing device being configured to detect whether there is an abnormality in the traction battery based on the image of the traction battery and the battery swap process information.

10. The system according to claim 9, wherein the system further comprises a parking detection module configured to determine whether the vehicle with the battery to be swapped is parked in place by comparing an actual pose and a theoretical pose of the vehicle with the battery to be swapped on a parking platform, and output a determination result to the control module.

11. The system according to claim 9 or 10, wherein the edge computing device comprises a first module, and the first module is configured to detect whether there is a housing abnormality and/or a fastening position abnormality in a used battery, and to assess an impact of the housing abnormality and/or a fastener on the used battery.

12. The system according to claim 11, wherein a deep learning model constructed based on a plurality of first sample images is stored, in a memory of the first module, to detect whether there is a housing abnormality and/or a fastening position abnormality in the used battery.

13. The system according to claim 11 or 12, wherein the edge computing device further comprises a second module, and the second module is configured to detect whether a head of a locking/unlocking mechanism configured to screw or unscrew a service battery fastener is left at the fastener.

14. The system according to claim 13, wherein a deep learning model constructed based on a plurality of second sample images is stored, in a memory of the second module, to detect whether the head of the locking/unlocking mechanism is left at the fastener, the second sample image being an image of the service battery that is obtained by the image acquisition module or a sub-image of the image that comprises the fastener.

15. The system according to any one of claims 9 to 14, wherein the image acquisition module is provided with a two-dimensional image acquisition apparatus.
